**Europäisches Patentamt**

**European Patent Office**

**Office européen des brevets**

(19)

(11) Veröffentlichungsnummer : **0 004 937**
**B2**

(12) # NEUE EUROPÄISCHE PATENTSCHRIFT

(45) Veröffentlichungstag der neuen Patentschrift : 28.05.86

(21) Anmeldenummer : 79101109.1

(22) Anmeldetag : 11.04.79

(51) Int. Cl.⁴ : **C 08 G 18/32, C 08 G 18/08**

(54) **Verfahren zur Herstellung von thermoplastischen Polyurethanelastomeren.**

(30) Priorität : 21.04.78 DE 2817456

(43) Veröffentlichungstag der Anmeldung :
31.10.79 Patentblatt 79/22

(45) Bekanntmachung des Hinweises auf die Patenterteilung : 22.09.82 Patentblatt 82/38

(45) Bekanntmachung des Hinweises auf die Entscheidung
über den Einspruch : 28.05.86 Patentblatt 86/22

(84) Benannte Vertragsstaaten :
BE DE FR IT NL

(56) Entgegenhaltungen :
DE-A- 1 645 578
DE-A- 2 432 090
DE-A- 2 434 146
DE-A- 2 447 368
DE-A- 2 513 817
DE-A- 2 537 775
US-A- 3 214 411

(73) Patentinhaber : BAYER AG
Konzernverwaltung RP Patentabteilung
D-5090 Leverkusen 1 Bayerwerk (DE)

(72) Erfinder : Quiring, Bernd, Dr.
Albrecht-Haushofer Strasse 2
D-5090 Leverkusen (DE)
Erfinder : Niederdellmann, Georg, Dr.
Heine Strasse 6
D-4047 Dormagen (DE)
Erfinder : Goyert, Wilhelm, Dr.
Wolfskaul 10
D-5000 Köln 80 (DE)
Erfinder : Wagner, Hans, Dr.
Tizianstrasse 13
D-4047 Dormagen (DE)

EP 0 004 937 B2

**0 004 937**

## Beschreibung

Die vorliegende Erfindung betrifft ein verbessertes Verfahren zur Herstellung von thermoplastischen Polyurethanen in Extrudern, bevorzugt in selbstreinigenden Mehrwellenextrudern.

Thermoplastische Polyurethane werden aufgrund ihrer hervorragenden physikalischen Eigenschaften seit Jahren für die unterschiedlichsten Einsatzzwecke verwendet. Von den in der Literatur beschriebenen Herstellungsverfahren für solche Thermoplasten bietet sich vor allem die direkte Herstellung in selbstreinigenden Zweiwellenschneckenmaschinen an. In diesen Apparaten wird eine sehr rasche homogenisierung des Reaktionsgemischs erreicht, und die Schneckenwellen reinigen einander um den Zylinder an allen Stellen, so daß auch vorübergehende Anbackungen, die durch die lange Hitzeeinwirkung zu Zersetzung oder vernetzten Produkten führen könnten, vermieden werden.

Bei den bisher bekannten Verfahren sind besondere Maßnahmen notwendig, um die Reaktanden (höhermolekulares Polyol, Kettenverlängerer und Diisocyanat) so zusammenzubringen, daß eine homogene Mischung entsteht, bevor die Polyurethanbildung in merklichem Umfang eingesetzt hat. Werden die Reaktionspartner zu langsam gemischt, so entstehen inhomogene Polyurethane, die nicht oder nur schwer lösliche bzw. aufschmelzbare Gelteilchen enthalten.

Nach der Lehre der US-Patentschrift 3 233 025 werden die einzelnen Reaktionspartner zunächst in einem besonderen Mischaggregat zusammengebracht und erst die homogene Reaktionsschmelze in die Schneckenmaschine eingespeist.

Bei dem in der US-Patentschrift 3 642 964 beschriebenen Verfahren müssen die Reaktionspartner ebenfalls sehr schnell gemischt werden. Das wird erreicht, indem die Reaktionsschmelze in einer Zweiwellenschneckenmaschine spätestens 6 Sekunden nach der Einspeisung von Diisocyanat und Diol in einer Mischzone mit Hilfe von Knetbesätzen intensiv homogenisiert wird. Ferner ist es zur Erzielung eines einheitlichen Produkts notwendig, daß die Schmelzviskosität über die gesamte Extruderlänge praktisch gleich (im Bereich zwischen ca. 100 und 1 000 Pa s) bleibt.

Entsprechend der Lehre der DE-Offenlegungsschriften 23 02 564 und 25 49 372 muß hingegen bereits in einem Stadium, in dem die Reaktionsschmelze noch eine niedrige Viskosität (ca. 20 bis 70 Pa s) hat, das Reaktionsgemisch mit Hilfe von Knetelementen in der Schnecke intensiv gemischt werden, damit die Bildung von Inhomogenitäten im Endprodukt vermieden wird.

Bei den Verfahren der DE-Offenlegungsschriften 24 47 368 und 26 10 980 muß von der Einzugszone bis zum Verlassen des Extruders ein abfallendes Temperaturprofil in der Reaktionsschmelze eingestellt werden, so daß man nur wenig Möglichkeiten zum Steuern der Polyisocyanatpolyadditionsreaktion hat. Außerdem bedingt das Verfahren einen großen technischen Aufwand wie füllstandsgeregelte Rohstoff-Vorratsbehälter, aufwendige Pumpensteuerung, Schneckenwellen mit hohem Fördergrad in der Einzugs- und Austragszone, sowie ständige Kontrollmessungen von Druck, Temperatur, Drehmoment und Schmelzviskosität. Besonders schwierig dürfte die Herstellung eines homogenen thermoplastischen Polyurethans entsprechend der Lehre der DE-OS 26 10 980 sein, da die Ausgangsprodukte zuerst hoch erhitzt und erst dann zusammengebracht werden. Ohne seine sehr rasche Durchmischung dürfte eine erheblicher Teil der Polyurethanreaktion bereits ablaufen, während noch lokale Überkonzentrationen der einzelnen Reaktionspartner vorliegen, so daß ein uneinheitliches Produkt entsteht. Außerdam sind die Ausgangstemperaturen so hoch, daß das entstehende Polyurethan thermisch geschädigt werden kann.

In der DE-OS 16 45 578 wird die Verwendung von Glykol-Gemischen von 10-50 % einer Zweitkomponente zur Herstellung von Polyurethanelastomeren mit verbesserter bleibender Verformung und geringem Steifigkeitsgrad und geringerer Verfestigungsneigung beschrieben. Es handelt sich jedoch um sogenannte « Gließsysteme », d. h. es werden die vermischten Komponenten diskontinuierlich während der PU-Bildung in ihre endgültige Form gebracht und durch lange Ausheizzeiten in der Reaktion zu Ende geführt. Diese Fertigungsmethode ist nicht sehr wirtschaftlich. Das Verfahren ist nur für relativ « weiche » Polyurethane geeignet und für härtere, steifere Polyurethanelastomere mit höheren Kettenverlängerungsmittelgehalten wegen der dann wesentlich höheren Reaktionsgeschweindigkeit nicht mehr diskontinuierlich durchführbar ; auch ist die Anwendungsbreite des Verfahrens beschränkt, z. B. sind Polypropylenglykoläther nach dem Verfahren der DE-OS nicht mehr homogen umsetzbar, wohl jedoch nach dem erfindungsgemäßen Verfahren.

In der DE-OS 24 32 090 werden ganz spezielle Produkte mit hoher Kristallisationsfreudigkeit beschrieben, wobei bestimmte Anteile an Hexamethyleneinheiten in Polyester Diisocyanat oder Kettenverlängerer (evtl. als Kettenverlängerer-Glykolgemisch) vorliegen müssen. Aus dieser Veröffentlichung war keine Lehre für die Erfindung zu ziehen, so werden z. B. auch solche speziellen Polyurethane als geeignet beschrieben, die Butandiol als alleinigen Kettenverlängerer enthalten.

Es liegen somit aus der Kenntnis, daß man bei der Polyurethanherstellung Gemische von Glykolen einsetzen kann, keine Hinweise darauf vor, daß man zu gelteilchenfreien, homogenen Elastomeren in einfacher, unkritischer Schneckenextrudertechnologie auch bei harter Polyurethan-Einstellung kommen kann.

Es wurde nun überraschend ein Verfahren zur Herstellung von thermoplastischen, homogenen von Gelteilchen, freien Polyurethanen in Extrudern, bevorzugt Mehrwellenschneckenmaschinen, besonders bevorzugt selbstreinigenden Zweiwellenschneckenmaschinen, gefunden, bei dem die genannten Hilfsmittel zur Erzielung einer raschen Durchmischung der Reaktionsschmelze nicht notwendig sind. Bei der Ausübung der erfindungsgemäßen Verfahrens kann darauf verzichtet werden, Knetblöcke an einer bestimmten Stelle der Schneckenwellen anzuordnen ; die Reaktionspartner brauchen nicht vorgemischt zu werden, und es ist auch nicht notwendig, daß ein sehr enges Temperatur- und/oder Viskositätsprofil eingehalten wird.

Gegenstand der vorliegenden Erfindung ist ein kontinuierliches Vefahren zur Herstellung von thermoplastischen Polyurethanen durch Umsetzung von

A) einem oder mehreren, im wesentlichen linearen Polyolen mit Molekulargewichten zwischen 400 und 10 000,

B) einem oder mehreren organischen Diisocyanaten und

C) einem hydroxylgruppenaufweisenden Kettenverlängerungsmittel oder Gemischen von Glykolen, mit einem Molekulargewicht unter 250,

wobei das Verhältnis der NCO-Gruppen von komponente B) zu den zerewitinoff-aktiven Gruppen der Komponenten A) und C) zwischen 0,90 und 1,2 liegt und wobei die Komponenten A) und C) im molaren Verhältnis von 1 : 50 bis 5 : 1 eingesetzt werden, in Extrudern, dadurch gekennzeichnet, daß als Kettenverlängerungsmittel C) ein Gemisch zweier Glykole eingesetzt wird, von denen eines in einer Menge von 90 bis 99 Gew.-%, bezogen auf die gesamte Komponente C), und ein zweites in einer Menge von 1 bis 10 Gew.-%, bezogen auf die gesamte Komponente C), vorhanden ist und die Glykole Ethylenglykol, Diethylenglykol, Propandiol-1,2, Butandiol-1,3, Butandiol-1,4 und Hexandiol-1,6 sind und wobei Butandiol-1,4 als Hauptkomponente eingesetzt wird, die polyurethanbildenden Reaktionspartner nicht vorher gemischt werden und die Umsetzung in selbstreinigenden Zweiwellenschneckenmaschinen erfolgt.

Als im wesentlichen lineare Polyole mit Molekulargewichten zwischen 400 und 10 000, bevorzugt zwischen 450 und 6 000, kommen erfindungsgemäß praktisch alle an sich bekannten, vorzugsweise 2, gegebenenfalls — in untergeordneten Menge — auch 3, zerewitinoffaktive Gruppen (im wesentlichen Hydroxylgruppen) enthaltenden Polyester, Polyactone, Polyäther, polythioäther, Polyesteramide, Polycarbonate, Polyacetale, Vinylpolymere wie z. B. Polybutadiendole, bereits Urethan- oder Harnstoffgruppen enthaltenden Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in betracht. Diese Verbindungen entsprechen dem Stand der Technik und werden z. B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Erfindungsgemäß bevorzugt sind hydroxylgruppenhaltige Polyester aus Glykolen und Adipinsäure, Phthal- und/oder Terephthalsäure sowie deren Hydrierungsprodukten, Hydroxylpolycarbonate, Polycaprolactone, Polyäthylenoxid, Polypropylenoxid, Polytetrahydrofuran und Mischpolyäther aus Äthylenoxid und Propylenoxid.

Erfindungsgemäß zu verwendende Diisocyanate sind die an sich bekannten aliphatischen, cycloaliphatischen, aromatischen, araliphatischen und heterocyclischen Diisocyanate des Standes Der Technik wie sie z. B. in den bereits genannten DE-Offenlegungsschriften 23 02 564, 24 23 764, 25 49 372, 24 02 840 und 24 57 387 beschrieben sind. Erfindungsgemäß bevorzugte Diisocyanate sind gegebenenfalls substituiertes Hexamethylen-diisocyanat, Isophorondiisocyanat, Lysinesterdiisocyanate, die verschiedenen Toluylen-, Diphenylmethan- und Xylylendiisocyanate sowie deren Hydrierungsprodukte.

Auch die erfindungsgemäß einzusetzenden Kettenverlängerungsmittel sind an sich bekannt und z. B. in den DE-Offenlegungsschriften 23 02 564, 25 49 372, 24 02 799, 24 02 840 und 24 57 387 beschrieben.

Es wurde überraschend gefunden, daß sogar bei Verwendung von nur 1-2 Gew.-% eines zweiten Glykols als Cokettenverlängerer die Herstellung von Polyurethanthermoplasten in Extrudern wesentlich unproblematischer ist. Es wird dann nicht mehr notwendig, auf ein bestimmtes Temperaturprogram, auf die Viskosität der Reaktionsschmelze oder auf eine genaue Auslegung des Wellenbesatzes zu achten. Die aus dem Extruder austretenden Produkte sind bei Änderung der Reaktionsparameter innerhalb weiter Grenzen homogen und frei von Gelteilchen.

Cokettenverlängereranteile von bis zu 10 Gewichtsprozent des Kettenverlängererglykolgemischs führen praktisch noch nicht zu einer Änderung der physikalischen Eigenschaften der thermoplastischen Polyurethane. Größere Cokettenverlängerermengen bewirken z. B. eine Herabsetzung des Erweichungsbereichs und stärkeres Schrumpfen.

Das erfindungsgemäße Verfahren kann gegebenenfalls auch in Gegenwart von Gleitmitteln, Stabilisatoren, Katalysatoren, anorganischen und organischen Füllstoffen, Pigmenten und Farbstoffen, Thermoplasten, Weichmachern, inerten organischen Lösungsmitteln usw., wie sie dem oben zitierten Stand der Technik entsprechen, durchgeführt werden.

Geeignete Schneckenmaschinen werden z. B. in den DE-Patentschriften 813 154, 862 668 und 940 109, der DE-OS 2 302 564 (US-Patent 3 963 679) sowie den US-Patenten 3 233 025 und 3 642 964 beschrieben.

Die Verweilzeiten der Reaktionsschmelze in der Schneckenmaschine betragen in der Regel 0,3-30 Minuten, bevorzugt 0,5-4 Minuten. Die Temperatur des Schneckengehäuses liegt zwischen etwa 60 und 280 °C (ca. 80 bis 250 °C in der Eingangszone ; ca. 100 bis 280 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch oder in Lösung zu Filmen, Zahnrädern, Kabelummantelungen, Dichtungen usw. verarbeitet werden.

Die folgenden Beispiele erläutern das erfindungsgemäße Verfahren. Wenn nicht anders vermerkt, sind Mengenangaben als Gewichtsteile bzw. Gewichtsprozente zu verstehen. In allen Beispielen wird eine Zweiwellenschneckenknetpresse des Typs ZSK 53 V der Firma Werner & Pfleiderer, Stuttgart, mit selbstreinigendem Wellenbesatz verwendet. Die Länge des Verfahrensteils entspricht etwa dem 42 fachen Wellendurchmesser. Für alle Beispiele wird der gleiche Wellenbesatz mit einem Knetelementanteil von ca. 20 % verwendet. Der Verfahrensteil besteht aus 12 Gehäusen, wobei das erste mit einem Einspeisetrichter versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

## Beispiel 1

Aus 100 Teilen eines difunktionellen Polypropylenglykols vom Durchschnittsmolekulargewicht 2 000 und 96 Teilen 4,4'-Diphenylmethandiisocyanat wird bei 80 °C unter Feuchtigkeitsausschluß in Gegenwart von 10 ppm Zinn (II)-isooctoat ein Präpolymer mit einem NCO-Gehalt von 13,8 % hergestellt. Zu 196 Teilen dieses Präpolymers wird in den Trichter der Scheckenmaschine aus einer getrennten Leitung eine auf 60 °C erwärmte Mischung aus 100 Teilen eines Polybutylenadipats mit einem Durchschnittsmolekularge-wicht von 2 100 und einer Säurezahl von 0,7, 23,6 Teilen Butandiol-(1,4) und 1,6 Teilen Hexandiol-(1,6) dosiert. Die Schneckenmaschine wird bei gleichen Temperaturen wie in Beispiel 1) mit Drehzahlen von

a) 150 min$^{-1}$
b) 300 min$^{-1}$

gefahren. In beiden Fällen treten homogene Schmelzen aus der Maschine aus.

Aus den abgekühlten Produkten werden durch Spritzguß Prüfkörper hergestellt, die gemäß DIN-Norm 53504 folgende physikalische Werte haben :

| Prüfkörper (Normalstab S 1) | Zugfestigkeit (M Pa) | Bruchdehnung (%) |
|---|---|---|
| a) | 34 | 560 |
| b) | 32 | 570 |

## Beispiel 2

Es wird wie in Beispiel 3 beschrieben verfahren, jedoch wird die Mischung aus Polybutandioladipat, Butandiol und Hexandiol in das 2. Gehäuse der Schneckenmaschine eingespeist. Sowohl bei einer Wellendrehzahl von a) 200 min$^{-1}$ als auch bei b) 300 min$^{-1}$ werden homogene Produktschmelzen erhalten.

An Doppelschulternormstäben S 1 werden unter den in der DIN Norm 53504 genannten Bedingungen folgende mechanische Eigenschaften ermittelt :

| Prüfkörper | Zugfestigkeit (M Pa) | Bruchdehnung (%) |
|---|---|---|
| a) | 36 | 520 |
| b) | 31 | 560 |

## Vergleichsbeispiel

Man verfährt wie im Beispiel 2 beschrieben, verwendet jedoch Butandiol-(1,4) (123 Teile) als alleinigen Ketenverlängerer. Die 25 %ige Lösung des Reaktionsproduktes in Dimethylformamid/Methyläthylketon (1 : 1) enthält unlösliche Gelteilchen.

## Patentansprüche

1. Kontinuierliches Verfahren zur Herstellung von thermoplastischen Polyurethanen durch Umsetzung von

A) einem oder mehreren, im wesentlichen linearen Polyolen mit Molekulargewichten zwischen 400 und 10 000,

B) einem oder mehreren organischen Diisocyanaten und

4

C) einem hydroxylgruppenaufweisenden Kettenverlängerungsmittel oder Gemischen von Glykolen, mit einem Molekulargewicht unter 250, wobei das Verhältnis der NCO-Gruppen von Komponente B) zu den zerewitinoff-aktiven Gruppen der Komponenten A) und C) zwischen 0,90 und 1,2 liegt und wobei die Komponenten A) und C) im molaren Verhältnis von 1 : 50 bis 5 : 1 eingesetzt werden, in Extrudern, dadurch gekennzeichnet, daß als Kettenverlängerungsmittel C) ein Gemisch zweier Glykole eingesetzt wird, von denen eines in einer Menge von 90 bis 99 Gew.-%, bezogen auf die gesamte Komponente C), und ein zweites in einer Menge von 1 bis 10 Gew.-%, bezogen auf die gesamte Komponente C), vorhanden ist und die Glykole Ethylenglykol, Diethylenglykol, Propandiol-1,2, Butandiol-1,3, Butandiol-1,4 und Hexandiol-1,6 sind und wobei Butandiol-1,4 als Hauptkomponente eingesetzt wird, die polyurethanbildenden Reaktionspartner nicht vorher gemischt werden und die Umsetzung in selbstreinigenden Zweiwellenschneckenmaschinen erfolgt.

2. Verfahren nach Anspruch 1, dadurch gekennzeichnet, daß man an der Eingangszone des Zweiwellenextruders Gehäusetemperaturen von 150-250 °C einstellt.

3. Verfahren nach Ansprüchen 1 und 2, dadurch gekennzeichnet, daß man Mischungen aus Butandiol-1,4 als Hauptkomponente und Ethylenglykol oder Hexandiol-1,6 als Cokomponente verwendet.

### Claims

1. Continuous process for the production of thermoplastic polyurethanes by reacting

A) one or more substantially linear polyols having molecular weights between 400 and 10 000,

B) one or more organic diisocyanates and

C) one hydroxyl-group-containing chain-extending agent or mixtures of glycols, having a molecular weight below 250, the ratio of the NCO groups of component B) to the Zerewitinoff-active groups of components A) and C) being between 0.90 and 1.2 and components A) and C) being used in a molar ratio of 1 : 50 to 5 : 1, in extruders, charcterised in that the chainextending agent C) used is a mixture of two glycols, of which one is present in a quantity of 90 to 99 % by weight, based on the total component C), and a second is present in a quantity of 1 to 10 % by weight, based on the total component C), and the glycols are ethylene glycol, diethylene glycol, 1,2-propanediol, 1,3-butanediol, 1,4-butanediol and 1,6-hexanediol, 1,4-butanediol being used as the main component, the polyurethane-forming reactants are not previously mixed and the reaction is carried out in self-cleaning two-shaft screw machines.

2. Process according to Claim 1, characterised in that barrel temperatures of 150-250 °C are adjusted in the feed zone of the two-shaft extruder.

3. Process according to Claims 1 and 2, characterised in that mixtures of 1,4-butanediol as the main component and ethylene glycol or 1,6-hexanediol as the cocomponent are used.

### Revendications

1. Procédé continu pour la fabrication de polyuréthannes thermoplastiques par réaction de

A) un ou plusieurs polyols essentiellement linéaires, de poids moléculaires compris entre 400 et 10 000,

B) un ou plusieurs diisocyanates organiques et

C) un agent d'allongement de chaînes à groupes hydroxyles ou des mélanges de glycols, ayant un poids moléculaire inférieur à 250, le rapport des groupes NCO du composant B) aux groupes actifs de Zerewitinoff des composants A) et C) étant compris entre 0,90 et 1,2 et les composants A) et C) étant utilisés dans un rapport molaire de 1 : 50 à 5 : 1, dans des extrudeuses, caractérisé en ce que l'on utilise comme agent d'allongement de chaînes un mélange de deux glycols, dont l'un est présent en quantité de 90 à 99 % en poids, par rapport au composant C) total, et un second en quantité de 1 à 10 % en poids, par rapport au composant C) total, et les glycols sont l'éthylèneglycol, le diéthylèneglycol, le propanediol-1,2, le butanediol-1,3, le butanediol-1,4 et l'hexanediol-1,6 et le butanediol-1,4 est utilisé comme composant principal, les partenaires de réaction formant le polyuréthanne ne sont pas mélangés au préalable et la réaction a lieu dans des machines à deux vis.

2. Procédé selon la revendication 1, caractérisé en ce que l'on ajuste des températures du carter de 150-250 °C dans la zone d'entrée de l'extrudeuse à deux vis.

3. Procédé selon la revendication 1, caractérisé en ce que l'on utilise des mélanges de butanediol-1,4 comme composant principal et d'éthylèneglycol ou d'hexanediol-1,6 comme co-composant.